# EUROPÄISCHE PATENTSCHRIFT

(11) **EP 1 000 887 B1**
(45) Veröffentlichungstag und Bekanntmachung des Hinweises auf die Patenterteilung: **12.12.2001**
(21) Anmeldenummer: 99121119.4
(22) Anmeldetag: 22.10.1999
(51) Int. Cl.: B65G 57/30, B29C 51/44

(54) **Vorrichtung zum Aufnehmen und Stapeln von Behältern aus thermoplastischem Kunststoff**
Device for picking up and stacking of thermoplastic containers
Dispositif de prise et d'empilage de récipients en matière thermoplastique

(30) Priorität: 13.11.1998 DE 19852359
(43) Veröffentlichungstag der Anmeldung: 17.05.2000
(73) Patentinhaber: Illig, Adolf Maschinenbau GmbH & Co., 74081 Heilbronn (DE)
(72) Erfinder: Eichbauer, Volker, 74223 Flein (DE)

(56) Entgegenhaltungen:
- DE-A- 4 201 097
- DE-A- 19 509 057
- FR-A- 1 407 023

## Beschreibung

Die Erfindung betrifft eine Vorrichtung mit den Merkmalen des Oberbegriffes des Patentanspruches 1. Es sind Vorrichtungen bekannt (Typen ÜG der Patentanmelder), bei denen aus dem um ca. 80° aus der Arbeitsstellung geschwenkten Formwerkzeug die Behälter direkt in Stapelrinnen ausgestoßen werden, die in Axialrichtung fluchtend zur Übernahmestellung angeordnet sind. Bei dieser Ausführung müssen die Becher mit dem Rand voran in den bereits vorhandenen Stapel eingeschoben werden Das heißt, der Behälterrand muß sich über den Boden des zuvor gestapelten Bechers schieben, wobei es erforderlich ist, mit aufwendigen Halteteilen die Stapel so zu halten, daß der zuvor gestapelte Behälter nicht am Boden nach unten kippt, weil sonst der nachfolgende Behälter mit dem Rand auf diesen Boden trifft und den ganzen Stapel vor sich herschiebt. Störungen wären die Folge. Diese Halteteile müssen an mehreren Stellen über den Umfang verteilt angeordnet werden und üben immer einen gewissen Druck auf den Behälterrand als größtem Durchmesser auf, was zu dessen Deformation führen kann, da die Behälter aus Gründen der gewollten hohen Taktzahl der Vorrichtung noch relativ warm entformt werden.

Aus der DE 42 01 097 A 1 ist eine gattungsbildende Vorrichtung bekannt, die die ausgestanzten Behälter mit einer Übergabeeinrichtung aufnimmt und - mit dem Boden voran - die Behälter ineinander stapelt und dabei auf ein Transportband aufsetzt. Nachteilig bei dieser Vorrichtung ist es, daß die Behälter mit der Öffnung nach oben zu stehen kommen und immer die Gefahr besteht, daß Fremdkörper in diese gelangen. Aus hygienischen Gründen - die Behälter werden oft mit Lebensmitteln gefüllt - ist dies nicht immer tragbar.

Bei der Vorrichtung gemäß DE 195 09 057 A 1 wird dies zwar dadurch umgangen, daß die Behälter auf den Öffnungsrand gesetzt werden, doch ist hierzu eine zusätzliche Übergabe der aufgenommenen Behälter an eine zweite Übergabe erforderlich, was störungsanfällig ist. Eine zu große Luftbewegung im Bereich der Behälter durch Ansaugen - Abwerfen - Wiederansaugen - ist hygienisch bedenklich, da sich dadurch Keime und Staub auf die oft statisch aufgeladenen Behälter setzen können.

Abschließend wird noch auf die Aufnahmevorrichtung gemäß FR 1 407 023 A hingewiesen. Diese vorrichtung ist als Ganzes drehbar. Die einzelnen Aufnahmen sind linear beweglich auf ihrem Grundkörper angeordnet.

Der Erfindung liegt die Aufgabe zugrunde, die Vorrichtung so zu gestalten, daß das Aufnehmen und Übergeben der Behälter in Stapel auf einfache, störungsunanfällige Weise erfolgt. Die Behälter sollen vor dem Stapeln Zeit zum Abkühlen haben, damit keine Verformung des Behälterrandes durch die Rückhalteorgane der Stapelmagazine erfolgt. Die Vorrichtung solle für eine hohe Taktzahl der Thermoformmaschine ausgelegt sein.

Gelöst ist diese Aufgabe erfindungsgemäß durch die im Hauptanspruch angegebenen Maßnahmen. Die Unteransprüche stellen vorteilhafte Weiterbildungen dar.

Ausführungsbeispiele der Vorrichtung nach der Erfindung sind anhand der schematischen Zeichnung näher beschrieben.

Es zeigt:
- Figur 1: einen Längsschnitt durch die Vorrichtung und die Formstation der vorgeschalteten Formmaschine nach dem Übergeben der Behälter

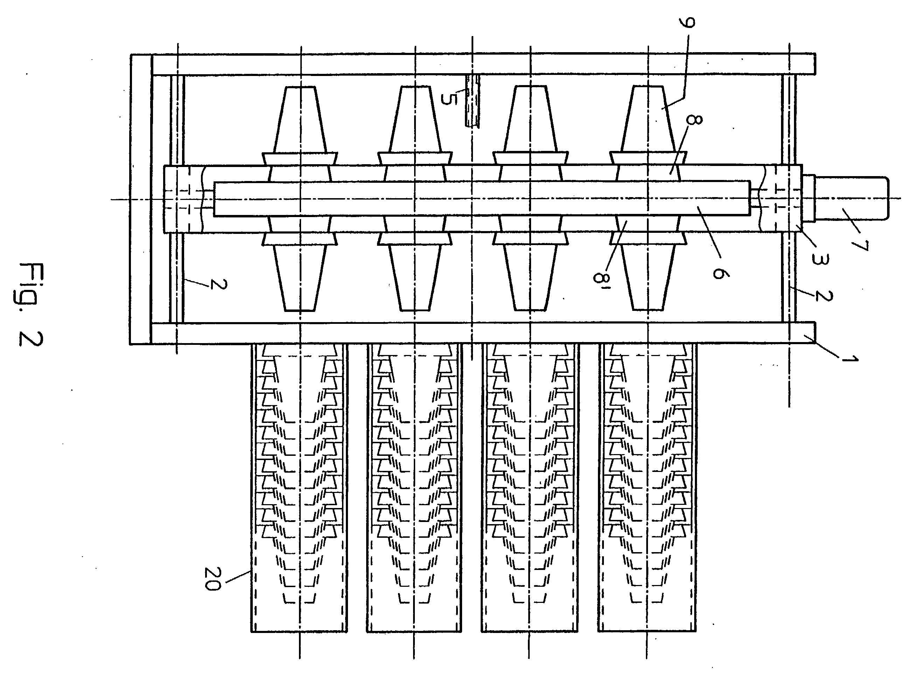

- Figur 2: eine Draufsicht auf die Vorrichtung in Pfeilrichtung (Figur 1)
- Figur 3 - 7: verschiedene Phasen des Verfahrensablaufes.
- Figur 8 + 9: Varianten der Antriebseinrichtungen der Vorrichtung

Die Vorrichtung besteht aus einem ortsfesten Gestell 1 mit Führungen 2 für einen daran verschiebbaren Schlitten 3. Zum Verschieben dient ein Antrieb 4, der vorzugsweise als Servomotor ausgebildet ist und über eine Spindel 5 die Verschiebung bewirkt. Ein Kurbeltrieb wäre ebenfalls einsetzbar und hat den Vorteil eines sinusförmigen Bewegungsablaufes. Am Schlitten 3 ist drehbar eine Aufnahmeeinrichtung gelagert, bestehend aus Platte 6 und Aufnahmen 8, 8' auf beiden Seiten entsprechend der Anzahl der aufzunehmenden Behälter 9 pro Takt - einreihig oder mehrreihig. Sie kann über einen Antrieb 7 verdreht werden, wobei dieser Antrieb 7 motorisch, pneumatisch oder hydraulisch wirksam sein kann und entweder direkt auf der Drehachse sitzt oder abseits und die Schwenkbewegung über Zahnräder, Ketten oder Hebel einleitet. Platte 6 und Aufnahmen 8, 8' weisen zusätzlich Bohrungen 10, 11 auf, die mit einer Vakuumquelle in Verbindung gebracht werden können. Auch ein rein mechanisches oder zusätzliches Halten über Hinterschnitte an den Aufnahmen 8, 8' ist möglich. Die Vorrichtung wird der Formstation 12 einer Thermoformmaschine nachgeschaltet, die einen höhenmäßig verschiebbaren und zur Vertikalen 13 um den Winkel 14 schwenkbaren Tisch 15 aufweist. Dieser trägt die Werkzeughälfte 16 mit der Form 17 der herzustellenden Behälter 9. Zum Ausstoßen der Behälter 9 dienen Stangen 18, die am Formboden 19 befestigt sind. In Axialrichtung des geschwenkten Tisches 15 verlaufen Stapelmagazine 20 mit Rückhalteorganen 21, die eingestapelte Behälter 9 zurückhalten.

Die Vorrichtung zum Übergeben der aus der Werkzeughälfte 16 ausgestoßenen Behälter 9 in die Stapelmagazine 20 arbeitet wie folgt:

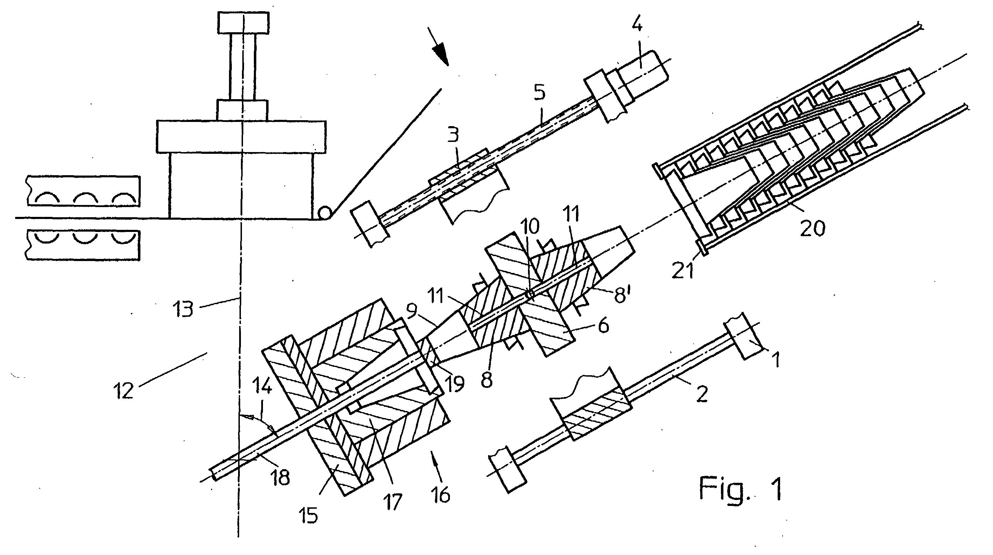

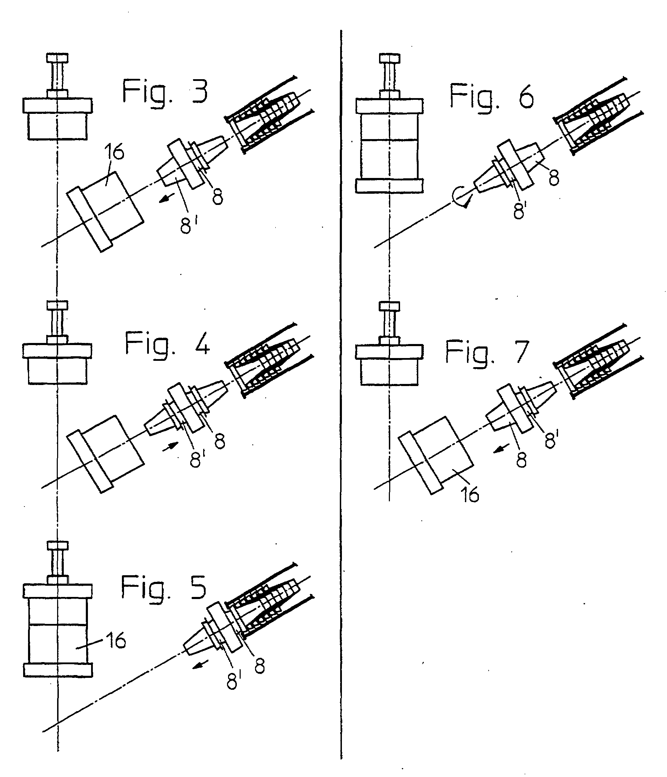

Nach dem Absenken und Schwenken des Tisches 15 in die in Figur 1 dargestellte Stellung wird die Platte 6 über den Antrieb 4 soweit an die Werkzeughälfte 16 herangefahren, daß die ausgestoßenen Behälter 9 von den Aufnahmen 8 aufgenommen und angesaugt werden können (Fig. 1). Die Platte 6 wird von der Werkzeughälfte 16 weggefahren, übergibt die beim letzten Takt aufgenommenen Behälter 9 in die Stapelmagazine 20, bewegt sich zurück in eine Zwischenstellung und schwenkt über den Antrieb 7 um 180° (Fig. 3). Beim nächsten Takt nehmen die Aufnahmen 8' die nächste Behälterreihe auf Fig. (4) und der Schlitten 3 fährt einen ganzen Hub, so daß die beim letzten Takt aufgenommenen Behälter 9 in die Stapelmagazine 20 übergeben werden (Fig. 5). Das heißt, die Behälter hatten einen Takt Zeit abzukühlen, bevor die Stapelung erfolgt. Die Platte 6 wird wieder zurück in eine Zwischenposition (Fig. 6) gefahren und um 180° geschwenkt (Fig. 7), so daß die leeren Aufnahmen 8 die nächsten Behälter 9 aufnehmen können, während die Aufnahmen 8' die zuvor ausgegebenen Behälter 9 festhalten. Der Zyklus beginnt erneut.

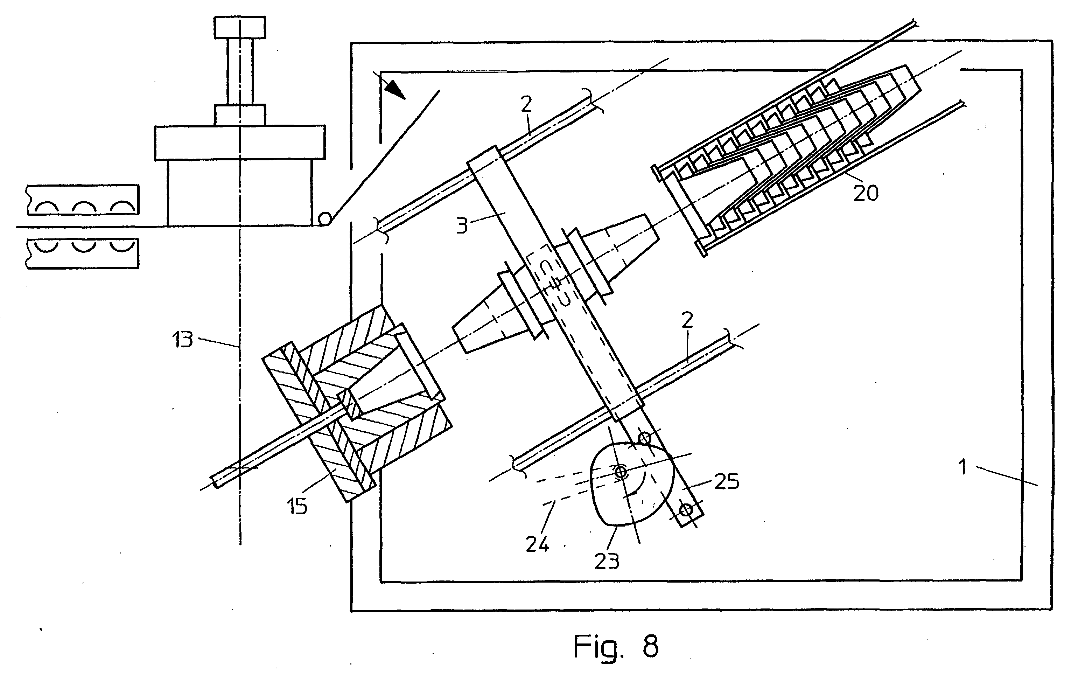

Fig. 8 zeigt eine mechanische Kupplung des Antriebes für die Axialverschiebung des Schlittens 3 mit dem Antrieb der Thermoformmaschine. Diese wird in der Regel mit einem Kniehebelantrieb über eine Hauptwelle angetrieben. Von dieser Hauptwelle aus kann man eine Kurvenscheibe 23 z.B. über eine Kette 24 antreiben, die ein Hebelpaar 25 schwenkt. Dieses Hebelpaar 25 greift am Schlitten 3 an und bewirkt dessen Axialbewegung. Eine Veränderung der Taktzahl an der Thermoformmaschine bewirkt auf diese Weise automatisch eine Anpassung des Bewegungsablaufes der Vorrichtung zum Übergeben. Eine Kollision zwischen Platte 6 / Aufnahmen 8, 8' mit der Werkzeughälfte 16 ist auf diese Weise zwangsweise verhindert, die bei einem separaten Antrieb der Schlittenbewegung im Fehlerfalle bzw. bei Falschprogrammierung / -einstellung eintreten könnte. Ein eigener Antrieb für die Drehbewegung der Kurvenscheibe 23 und Kopplung über eine elektrische Welle mit dem Antrieb der Hauptwelle bringt den Vorteil, daß bestimmte Bewegungsabläufe unabhängig von der Taktzahl der Thermoformmaschine ablaufen können.

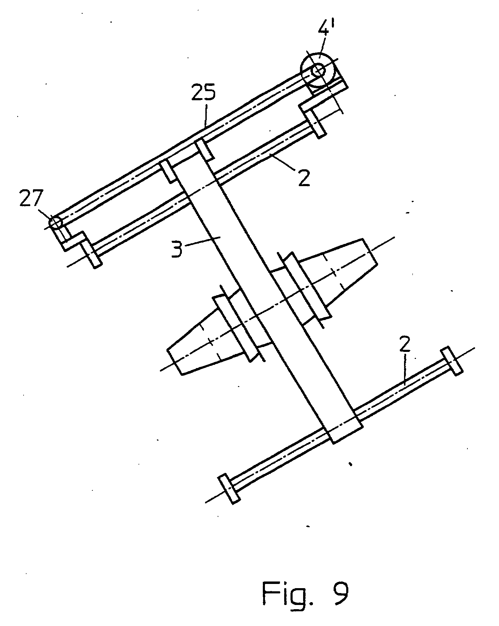

Die Figur 9 zeigt eine andere Antriebsart für die Axialbewegung der Aufnahmeeinrichtung über einen Antrieb 4', der einen Zahnriemen 26 - auch eine Kette ist stattdessen einsetzbar - bewegt, der an der Platte 8 befestigt und über ein Umlenkrad 27 geführt ist. Durch Rechts- / Linkslauf des Antriebes 4' erfolgt die Horizontalverschiebung.

## Patentansprüche

1. Vorrichtung zum Aufnehmen der aus einer Form-/Stanzstation ausgestoßenen, aus einer Kunststoffolie warmgeformten Behälter (9) und zum Übergeben in Stapelmagazine (20), bestehend aus einer Aufnahmeeinrichtung mit einer Saugeinrichtung und/oder mit mechanischen Halteeinrichtungen zum Festhalten der Behälter (9), die verschiebbar ausgebildet ist zwischen einer Aufnahmestellung vor der geöffneten Formwerkzeughälfte (16) und einer Ausgabestellung vor den Stapelmagazinen (20), wobei
a) zwischen der in Abgabestellung stehenden Formwerkzeughälfte (16) und den axial dazu fluchtenden Stapelmagazinen (20) die Aufnahmeeinrichtung (6, 8, 8') linear verschiebbar und um 180 ° zu einer Schwenkachse schwenkbar angeordnet ist und
b) die Aufnahmeeinrichtung mit starr daran angeordneten Aufnahmen (8) zur Schwenkachse symetrisch ausgebildet ist, so daß sie in beiden um 180° geschwenkten Stellungen Behälter (9) aufnehmen und abgeben kann.

2. Vorrichtung nach Anspruch 1 **gekennzeichnet durch** einen motorischen, pneumatischen oder hydraulischen Antrieb (7) zum Schwenken der Aufnahmeeinrichtung (6, 8, 8').

3. Vorrichtung nach Anspruch 2 **dadurch gekennzeichnet, daß** der Antrieb (7) direkt mit der Welle der Platte (6) gekoppelt ist.

4. Vorrichtung nach Anspruch 2 **dadurch gekennzeichnet, daß** der Antrieb (7) mit der Welle der Platte (6) indirekt über Kettentriebe, Riementriebe, Zahntriebe oder Hebelgetriebe gekoppelt ist.

5. Vorrichtung nach einem der Ansprüche 1 bis 4 **dadurch gekennzeichnet, daß** der Antrieb (4) zur Axialverschiebung der Aufnahmeeinrichtung (6, 8, 8') motorisch über eine Spindel (5) erfolgt.

6. Vorrichtung nach Anspruch 5 **dadurch gekennzeichnet, daß** der Antrieb zur Verschiebung der Aufnahmeeinrichtung (6, 8, 8') motorisch über einen Kurbeltrieb erfolgt.

7. Vorrichtung nach Anspruch 5 **dadurch gekennzeichnet, daß** der Antrieb zur Verschiebung der Aufnahmeeinrichtung (6, 8, 8') motorisch über einen an der Aufnahmeeinrichtung (6, 8, 8') befestigen, von einem Antrieb (4') bewegten Zahnriemen (26) erfolgt.

8. Vorrichtung nach einem der Ansprüche 3 bis 7 **dadurch gekennzeichnet, daß** als Antrieb ein Servomotor eingesetzt ist.

9. Vorrichtung nach einem der Ansprüche 1 bis 8 **dadurch gekennzeichnet, daß** der Antrieb zur Axialverschiebung der Aufnahmeeinrichtung (6, 8, 8') mit dem Antrieb der Formstation (12) der Thermoformmaschine mechanisch oder über eine eletrische Welle gekoppelt ist.

10. Vorrichtung nach Anspruch 9 **dadurch gekennzeichnet, daß** die Axialverschiebung über eine Kurvenscheibe (23) erfolgt, die einen an der Aufnahmeeinrichtung (6, 8, 8') bzw. am Schlitten (3) angreifenden Doppelhebel (25) verschwenkt.

## Claims

1. Device for receiving containers (9) ejected from a moulding/punching station and thermally moulded from a synthetic material foil and for transferring the containers into stack magazines (20), consisting of a receiving device with a suction device and/or with mechanical holding devices for firmly holding the containers (9), the device being constructed to be displaceable between a receiving setting in front of the opened mould tool halves (16) and a delivery setting in front of the stack magazines (20), wherein
a) the receiving device (6, 8, 8') is arranged to be linearly displaceable and pivotable through 180° at a pivot axis between the mould tool halves (16) standing in the discharge setting and the stack magazines (20) axially aligned therewith and
b) the receiving device together with receptacles (8) rigidly arranged thereat is constructed symmetrically relative to the pivot axis so that it can receive and deliver containers (9) in the two settings pivoted through 180°.

2. Device according to claim 1, **characterised by** a motorised, pneumatic or hydraulic drive (7) for pivoting the receiving device (6, 8, 8').

3. Device according to claim 1, **characterised in that** the drive (7) is directly coupled with the shaft of the plate (6).

4. Device according to claim 1, **characterised in that** the drive (7) is indirectly coupled with the shaft of the plate (6) by way of a chain drive, belt drive, gear drive or lever gear.

5. Device according to one of claims 1 to 4, **characterised in that** the drive (4) for axial displacement of the receiving device (6, 8, 8') is effected in motorised manner by way of a spindle (5).

6. Device according to claim 5, **characterised in that** the drive for displacement of the receiving device (6, 8, 8') is effected in motorised manner by way of a crank drive.

7. Device according to claim 5, **characterised in that** the drive for displacement of the receiving device (6, 8, 8') is effected in motorised manner by way of a cogged belt (26) fastened to the receiving device (6, 8, 8') and moved by the drive (4').

8. Device according to one of claims 3 to 7, **characterised in that** a servomotor is used as drive.

9. Device according to one of claims 1 to 8, **characterised in that** the drive for axial displacement of the receiving device (6, 6, 8') is coupled with the drive of the moulding station (12) of the thermomoulding machine mechanically or by way of an autosyn.

10. Drive according to claim 9, **characterised in that** the axial displacement is effected by way of a cam disc (23), which is pivoted to a double lever (25) engaging at the receiving device (6, 8, 8') or at the slide (3).

## Revendications

1. Dispositif de réception de récipients (9) faits d'une feuille de matière plastique formée à chaud, sortant d'un poste de formage-découpage et pour les faire passer dans des magasins d'empilage (20), comprenant une installation de réception équipée d'un dispositif d'aspiration et/ou de moyens mécaniques de maintien pour tenir fermement les récipients (9) et qui peut coulisser entre une position de réception située devant la moitié (16), ouverte, de l'outil de formage et une position de délivrance située devant les magasins d'empilage (20),
**caractérisé en ce que**
a) l'installation de réception (6, 8, 8') peut coulisser en ligne droite ente la moitié (16) de l'outil de formage en position de délivrance et les magasins d'empilage (20) axialement alignés avec cet outil, et peut basculer de 180° autour d'un axe, et,
b) l'installation de réception est équipée de réceptacles (8) montés rigidement symétriques par rapport à l'axe de basculement, de sorte qu'elle peut recevoir et délivrer des récipients (9) dans ses deux position basculées à 180° l'une de l'autre.

2. Dispositif selon la revendication 1,
**caractérisé en ce qu'**
il est équipé d'un entraînement (7) motorisé, pneumatique ou hydraulique, pour faire basculer l'installation de réception (6, 8, 8').

3. Dispositif selon la revendication 2,
**caractérisé en ce que**
l'entraînement (7) est accouplé directement à l'arbre de la plaque (6).

4. Dispositif selon la revendication 2,
**caractérisé en ce que**
l'entraînement (7) est accouplé indirectement à l'arbre de la plaque (6), par une transmission à chaîne, à courroie, à pignons ou à lèvres.

5. Dispositif selon l'une quelconque des revendications 1 à 4,
**caractérisé en ce que**
l'entraînement (4) servant à faire coulisser axialement l'installation de réception (6, 8, 8') est assuré par un moteur, par l'intermédiaire d'une broche filetée (5).

6. Dispositif selon la revendication 5,
**caractérisé en ce que**
l'entraînement servant à faire coulisser l'installation de réception (6, 8, 8') est assuré par un moteur, par l'intermédiaire d'une manivelle.

7. Dispositif selon la revendication 5,
**caractérisé en ce que**
l'entraînement servant à faire coulisser l'installation de réception (6, 8, 8') est assuré par un moteur, par l'intermédiaire d'une courroie crantée (26) fixée à l'installation de réception (6, 8, 8') et actionnée par un entraînement (4').

8. Dispositif selon l'une quelconque des revendications 3 à 7,
**caractérisé en ce qu'**
on utilise comme entraînement un servomoteur.

9. Dispositif selon l'une quelconque des revendications 1 à 8,
**caractérisé en ce que**
l'entraînement servant à faire coulisser axialement l'installation de réception (6, 8, 8') est accouplé à l'entraînement du poste de formage (12) de la machine de thermoformage, mécaniquement ou par un arbre électrique.

10. Dispositif selon la revendication 9,
**caractérisé en ce que**
le coulissement axial est assuré par un disque de came (23) qui fait basculer un levier double (25) en prise avec l'installation de réception (6, 8, 8') ou avec le coulisseau (3).
